# EUROPEAN PATENT APPLICATION

(11) **EP 4 618 060 A1**
(43) Date of publication of application: **17.09.2025**
(21) Application number: 24382272.3
(22) Date of filing: 13.03.2024
(51) Int. Cl.: G09B 19/00, E04H 4/00

(54) **METHOD AND SYSTEM FOR CUSTOMISING A SURF SESSION.**

(71) Applicant: Instant Sport, S.L., 20002 Donostia-San Sebastián, Gipúzkoa (ES)
(72) Inventor: ODRIOZOLA SAGASTUME, José Manuel, 20002 Donostia-San Sebastián (ES)
(74) Representative: Cueto, Sénida

(57) **Abstract**

Method and system for customising a surf session running in a facility provided with a wave W generator system (1) controlled by a controller (201). The method includes defining a set of customised preferences, detecting events and user input during the surf session and modifying the programming of the ongoing session based on the customised preferences, generating an output (400) to act on the wave generator system (1) to reflect those preferences. The invention allows customisation of the surf session in real time, based on a combination of detected events, automatic decisions of the controller (201) and surfer preferences. These preferences may be modified during the surf session, improving the degree of customisation of the surf session compared to conventional control systems.

## Description

### Technical field

The invention relates to a method and a system allowing the user to customise the programming of a surf session taking place in a facility provided with a surfable wave generator system. The invention is particularly advantageous in that it allows the surf session to be customised in real time, i.e. while the surf session is in progress.

### State of the art

Surfable wave generator systems are known in the Prior Art, e.g. sequential module generator systems, based on the arrangement of a series of contiguous modules acting in sequence to produce a surfable wave. The modules may comprise movable elements that can be moved and/or tilted in a sequential and repeatable manner, forming a moving wall of changing shape capable of causing disturbances in the body of water to generate surfable waves. These movable elements move with a time offset between them. A controller, communicated with the generator system, allows programming and controlling the time offset between adjacent modules, as well as the amplitude, speed and type of movement of the movable element. In this way, it is possible to control the angle and curvature of the wavefront to generate different types of waves. Other modular wave generator systems may comprise other types of generators, for example, a plurality of pneumatic chambers, with adjacent arrangements and also with sequential operation.

Also known in the Prior Art are control systems which, in addition to governing the sequential operation described above, allow the user to create customised wave profiles, i.e. customised wave types. An example of such systems is described in patent US11660546B2. The publication discloses a controller that governs the operation of the valves of a pneumatic wave generator system. Additionally, the controller allows the user, for example, from a mobile application, to design custom wave profiles prior to the start of the surf session including the configuration of the size, shape or pattern of the wave. The system offers the user other options to design more complex waves, by modifying, deleting or adding the sequential modules involved in the generation of the wave. Once the wave profile has been designed, the system allows the user to send the generated wave profile to the generator system and start wave generation or reuse the designed wave profile.

To do this, the US11660546B2 controller is connected to the generator system via a local area network, wireless, virtual private network or via the Internet. The controller can be local or remote, residing on a smartphone, PC, laptop or other. In order to define, share and send the designed wave profile designed to surf, prior to the start of the surf session, the controller has a graphical user interface and comprises several differentiated modules:
- wave creation module: which allows you to select a pre-designed wave profile, retrieve a previously saved wave profile, define a new customised profile, make adjustments to a wave profile remotely or locally, and optionally share the designed profile with other users e.g. by sending an email;
- wave simulation module: to visualise the designed/chosen profile, prior to sending it to the generator system;
- viewing module: which allows the playback of videos or photos of surf sessions and sharing them with other users; and
- wave control module: specific module that allows you to choose a surf facility, reserve a time for the surf session, select a camera for the subsequent recording of the surf session and operate the wave generator system to produce the previously designed wave profile.

In the State of the Art, there are also surfable wave facilities that allow the user to pre-select a surf session, based on a pre-defined wave menu, before the surf session starts. The aim is not for the user to design the wave profile, as in US11660546B2 described above, but for the user to choose from a conventional wave menu with different predefined wave types.

An example of a conventional menu may include, for example: several predefined wave profiles or wave types in the system (M: beginner waves, T: turning waves, B: tube waves; A waves for aerials); three wave heights (H1, H2 and H3) for each wave type; three levels of take-off difficulty (D1, D2, D3); three peeling speeds (S1, S2, S3), three powers (P1, P2, P3) and three types of wave ends (F1, F2, F3). A number of session levels may also be defined: for example, three types of sessions at beginner, intermediate and expert level, with a type of wave or another being allowed depending on the session level. Based on the above, it is possible to configure a predefined conventional session by default. For example, a conventional expert level session may comprise a first period of a certain duration (t1, for example, 20 minutes) during which a group of waves of type T2 is launched (turning waves of height H2, take-off difficulty D2 and compatible S, P and F parameters), followed by a second period of a certain duration (t2) during which a second group of waves of type T3 (H3 high turning waves of take-off difficulty D3) is launched and a third period of a certain duration (t3) during which a third group of waves of type B3 (H3 high tube waves also of take-off difficulty D3) is launched. What is modified or parameterised is the session and not the wave profiles, as the system does not allow to modify the predefined M, T, B, A wave types in the menu.

According to the above example, during a conventional session a series of waves are generated, wherein a series of waves is defined as one or more groups of consecutive waves of the same type. The parameters D, S, P and F above refer to:
- D (take-off): place on the wave where it starts to break and the initial manoeuvre consisting of standing up on the surfboard (pop-up) is performed;
- S (peeling speed): speed of the breaking point of the wave as the wave advances;
- P (power): power of the wave and, consequently, the degree of verticality of the wave before breaking;
- F (types of end wave):
   ∘ softer end: the wave fades progressively at the end, losing height and strength, thus breaking gently;
   ∘ stronger end: if the final path concentrates the energy at a point within the final path to break sharply at that end point;
   ∘ intermediate end: between the soft and the strong end as defined above.

Conventional wave facilities may integrate detection devices or systems such as weather sensors, water level sensors, personnel presence detectors or automatic image capture and analysis systems. Signals from these event detection devices are used to monitor the status of the facility and implement safeguards. A facility controller may include modules to control the following functionalities: control module for controlling the wave generator and the programmed wave sequence; conventional user (surfer) input or registration, including personal data and a picture of the user; surfer facial and body recognition modules; and surfboard identification. This type of information, generated by image capture systems and transmitted to the controller, is used for monitoring purposes and/or for analytical studies of surfing biomechanics.

The aim of the present invention is a method and control system for a wave facility, alternative to the known ones, which provides advantages to the user in relation to the degree of customisation of the surf session.

### Brief description of the invention

The invention relates to a method and system that allows the user to customise the programming of a surf session in real time. In the context of the present invention, a modifiable or customisable surf session "in real time" means that the surf session can be modified once the user is at the surf facility and the sport (surf session) has already started.

The user customising the surf session will usually be the surfer him/herself, although it is not excluded that it could be another user, such as a trainer or an operator.

Modifying the programmed session refers to selecting waves from a predefined menu of waves by choosing, for example:
- the session level (beginner, intermediate or expert),
- the type of wave to surf within a pre-determined wave menu (beginner M, turning T, tubes B, aerial A) of the system,
- versions of waves with different levels of difficulty of take-off (D), speed (S) or type of end wave (F),
- the number of waves of the same type for a group (wave repetition) during a given period.

In summary, the method and system of the invention are focused on modifying or parameterising in a personalised way the surf session, but not the predefined wave profiles of the conventional menu whose design is invariable. That is to say, the user can, by defining his/her preferences, choose or change to another type of wave, but not redesign the predefined wave types or profiles.

The method of the invention comprises the features and steps of claim 1 in order to reflect such preferences. The method is a method implemented in a programmable controller, for customising at least one surf session in a facility provided with a wave W generator system controlled by the controller. The method comprises the following steps:
a. receiving a set of customised preferences before the beginning of the surf session and/or during the surf session;
b. detecting at least one event during the surf session (e.g. at least one event (E1) of type E1 and/or one event (E2) of type E2 and/or one event (E3) of type E3 as defined below, or a combination thereof), and
c. modifying the programming of the ongoing surf session as a result of the detection of the event or combination of events and based on the set of customised preferences, generating an output to act on the wave generator.

The set of customised preferences involve the user's choice of any customisation option for the surf session. This set of customised preferences can be defined before the surf session starts and/or during the surf session, once the surf session has started. An example of a set of customised preferences defined before the surf session starts may be, for example, to establish that the take-off difficulty should be modified upon detection of a certain event or combination of events during the subsequent surf session. An example of a set of customised preferences defined after the surf session has started may be, for example, the simple choice (change) to another type of wave from a device that sends a user (surfer) input to the controller. In the remaining part of this description these features are described in greater detail.

In short, the essential advantage of the invention is to make it possible to customise the surf session in real time during the surf session. This advantage is very relevant. By way of example, the possibility of modifying the degree of difficulty of the take-off (parameter D) of the wave once the surfer has started surfing is particularly noteworthy. A surfer of insufficient level, who does not manage to stand up, would lose the opportunity to surf the remaining waves of a series (group of consecutive waves of the same type and parameters) due to an excessive degree of difficulty. The system of the invention allows him to redefine his preferences to conclude the series or to reduce the difficulty of the take-off for the following waves. For a high-level surfer it is also desirable to fine-tune the difficulty of the take-off in real time according to his level.

Preferably, the set of customised preferences of step a. of the method comprises the definition of at least one Session Preference associated with an Event (PSE) (or set of events) and the definition of at least one Predefined Event (PE). Furthermore, step c. is performed based on the Session Preference associated with the Event (PSE) when at least one event (E1, E2), event (E1) of type (E1) or event (E2) of type E2, matching a Predefined Event (PE) is detected in the facility. In this way, when a Predefined Event (PE) occurs during the development of the surf session, the controller is able to modify the programming of the session taking into account the Session Preferences associated to Events (PSE), which will be translated into consequences or concrete actions and manoeuvres on the wave generator system. Thus, the method of the invention allows the customisation of the surf session in real time in a way that is more adapted to the user's preferences.

Preferably, the set of customised preferences of step a. of the method comprises the definition of at least one Session Preference associated with an Input (PSI) of a user, so that step c. is performed based on the Session Preference associated with an Input (PSI), when at least one event (E3) generated from a user triggered input is detected. By means of these features, the method makes it possible to customise the ongoing session by taking into account the Session Preferences associated with Inputs (PSI) (inputs) generated by the user. In this way, the degree of customisation of the system is further increased compared to conventional systems.

The method of the invention may simultaneously comprise the options detailed in the two preceding paragraphs.

For ease of understanding, a couple of possible Session Preferences associated with Events (PSE) and Predefined Events (PE) are included below as a non-limiting example:
- PSE: decrease the difficulty of the take-off and return to the initial take-off based on the detection of a predetermined number of drops and non-drop waves respectively, wherein the associated Predefined Events (PE) may be 3 consecutive drops detected by an artificial vision system and the detection of 5 non-drop waves respectively.
- PSE: change of the wave type, after the following associated Predefined Events (PE), e.g. three successfully landed A aerial type manoeuvres or two T tube waves where no surfer fall has been detected.

Optionally, each event handled by the controller may be any of the following:
- external event (E1) of type E1from different sensors of the facility;
- event (E2) of type E2, external or surfer-related, determined by an artificial vision system from an image capturing system of the facility;
- event (E3) of type E3, generated as a result of a user triggered input.

Events may be of other types than those defined above, e.g. events calculated or generated by the controller itself.

Optionally, the method includes the possibility of defining a customised replacement session that determines preferences in relation to a conventional surf session from a predefined menu. Optionally, the customised replacement session comprises the replacement of each wave of a conventional session with another replacement wave. Alternatively, the customised replacement session comprises the complete replacement of a conventional surf session from a predefined menu with a replacement session. These optional features will be explained in greater detail with reference to the embodiment of the figures in the following section.

The generator system may be mechanical or pneumatic. For example, the generator system may comprise at least one set of sequential modules, each sequential module having a movable element capable of causing disturbances in a mass of water for the generation of surfable W waves. The movable elements move with a given amplitude, speed and a given time offset between them. In this type of system, the output actuation of step c. optionally comprises modifying the amplitude of movement and/or modifying the time offset and/or modifying the speed of at least some of the movable elements.

Alternatively, the generator system may be of a pneumatic type, with a set of sequential pneumatic chambers. In this type of system, optionally, the output actuation of step c. is performed on at least one drive or structure of the pneumatic chambers to modify the generation of surfable waves W.

The invention also relates to a system for customising a surf session in a facility. The system comprises:
- a wave W generator system controlled by a programmable controller;
- a session customisation module, comprised in the controller, for performing step a. of the method according to the invention,
- detection means communicated with the controller, for performing step b. of the method,
- instructions comprised in the controller for performing step c. of the method.

Optionally, the session customisation module comprises data related to at least one Session Preference associated to at least one Event (PSE) and data related to at least one Predefined Event (PE). Likewise, the detection means are capable of detecting at least one event (E1;E2) in the facility (of type E1 or E2) matching a Predefined Event (PE) and transmitting it to the controller.

Optionally, detection means comprise at least a water level sensor and a wind sensor for event generation (E1), and also an artificial vision system for generating events (E2) of type E2 from an image capturing system.

Optionally, the session customisation module of the controller comprises data relating to at least one Session Preference associated with a User Input (PSI) and the detection means are capable of detecting at least one event (E3) of type E3 generated from a user triggered input.

Also optionally, the means of detection comprise at least one device located at the take-off area, e.g. a button panel or a touch screen, for generating events (E3).

Optionally, the system of the invention may comprise a device provided with a user interface for entering preferences, e.g. at least the type of determined priority wave, and provided with one or more selectors for enabling and disabling session changes based on events.

The invention also relates to a program residing in the programmable controller of the facility provided with a surfable wave W generator system. The program comprises instructions which, when executed in said controller, cause the execution of the steps of the method of the invention.

In summary, the invention allows customisation of the wave session in real time based on a combination of detected events, automatic decisions and user preferences generating an output to act on the wave generator in order to appropriately react to the events for reflecting those preferences.

### Brief description of figures

The details of the invention are shown in the accompanying figures, which are not intended to limit the scope of the invention:
- Figure 1 shows a schematic representation of the components of a non-limiting embodiment of the system.
- Figure 2A shows a schematic representation of the functional blocks of the system of Figure 1.

- Figure 2B shows a diagram of the main modules or functional blocks of the controller of Fig. 2A.
- Figure 3: shows a non-limiting example of a device (touch screen) that allows the definition of customised preferences.

### Detailed description of the invention

The invention proposes a system that allows customising the programming of an ongoing surf session. The system allows the automatic modification of the session according to certain events or alarm situations during the ongoing session, so that the modification as a result of the event is carried out taking into account user preferences. This makes it possible to modify the wave generation sequence according to events occurring in the facility, once the session has started and according to user preferences and user-generated inputs.

A particular embodiment or example embodiment is described below, with reference to figures.

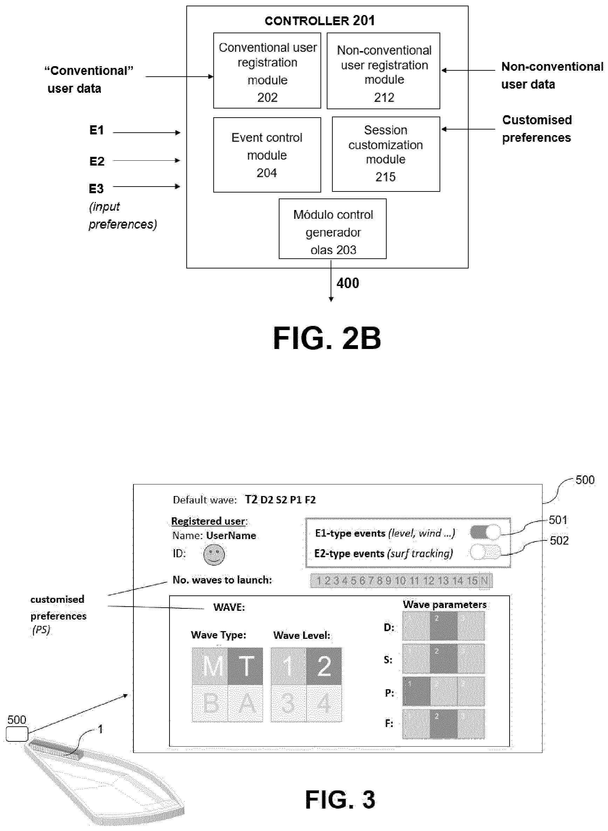

As shown in Fig. 2B, the controller (201) comprises a wave generator control module (203) and an event control module (204). The controller (201) may comprise a conventional user registration module (202) for the definition of a conventional personalised session, based on a predefined wave menu, prior to the start of the surf session, as well as for the introduction of personal data and an identifying image for the subsequent identification of the surfer during the surf session. For this subsequent identification, the system of the invention may comprise a surfer recognition system, for example, the surfer may be provided with a smartwatch or facial recognition systems may be installed in the facility. In other words, the system of the invention is compatible with conventional options such as:
- definition of a conventional customised session based on a predefined wave menu, prior to the start of the surf session, and execution of a wave programming sequence according to that conventional customised session,
- identification of the surfer associated with a session (through facial recognition or other) for monitoring and/or analysis of surfing biomechanics.

As also shown in Fig. 2B, the system of the invention supports two types of users:
- conventional users, optionally registered in a conventional user registration module (202) without access to the options of the session customisation module (215).
- non-conventional users, optionally registered in a non-conventional user registration module (212), with access to options provided by a session customisation module (215) characterising the invention.

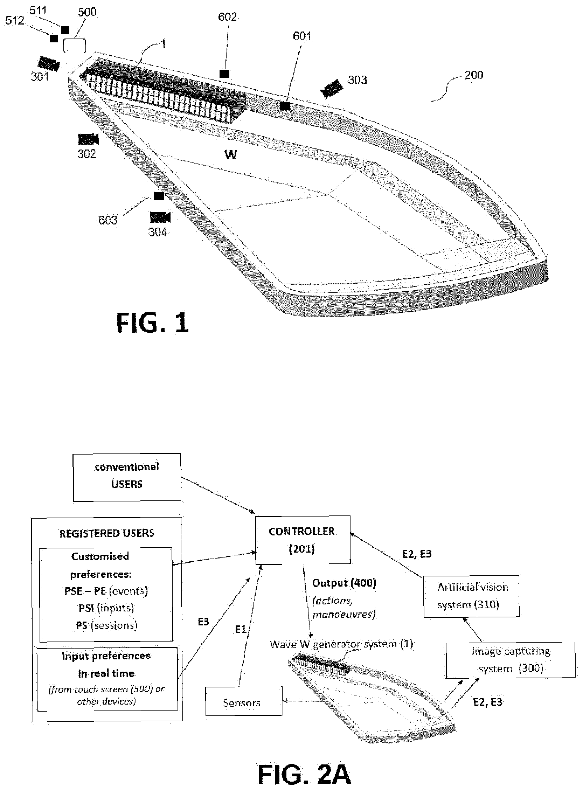

As shown in the diagrams of Fig. 2A and 2B, the controller (201) can control the surf session for both types of users. For this purpose, the controller (201) of this embodiment example includes a conventional user registration module (202) and a non-conventional user registration module (212). Only the latter (the non-conventional registered users) will be able to take advantage of all the functionalities that characterise the invention (real-time customisation based on user inputs and other preferences).

User registration is optional in the invention. That is, non-conventional users with access to the customisation options do not have to be compulsorily registered. These users can access the customisation options without specifically registering, e.g. preferences associated with events can be defined prior to the session or may be entered from a device (smartwatch or other) generating an input to system.

The system of the invention allows the participation of several surfers in the surf session.

An example of an embodiment of the system of the invention will be described below with reference to the Figures.

### Hardware components and system devices (see Fig. 1 and Fig. 2A)

In the embodiment of figures, a sequential surfable wave generator system (1) is shown. Each sequential module comprises a movable element capable of causing disturbances in a mass of water (2) for the generation of surfable waves W. The movable elements (20) are pistons. The invention is compatible with different types of pistons and with other different wave generation systems.

The system (200) includes sensors (600) for detecting external events of type E1 in the facility. In particular, it includes a water level sensor (601) in the lagoon (15), wind sensors (602) located in a weather station and, optionally, a personnel presence sensor (603) may be installed in the aid or surveillance post.

The system (200) of figures also includes an image capturing system (300) comprising several cameras installed at various points of the facility. In particular, the image capturing system (300) of figures comprises a camera (301) for facial recognition of the surfer, a camera (302) located in lighting devices and a camera (303) for tracking the wave and the surfer. An additional camera (304) may be installed in the surveillance post. The image capturing system (300) formed by the cameras (301, 302, 303, 304) is mainly used for the detection of events (E2) of type E2 (external or related to the evolution of the surfer's session), although it may also be used to identify and generate some events (E3) of type E3 (identification of orders/defining of preferences through the surfer's gestures, for example).

The system (200) also includes specific means for detecting events (E3) of type E3, i.e. to generate a data input to the controller, from the user, during the session. In the particular embodiment of figures, a touch screen (500) is provided in the take-off zone. Alternatively, a button panel may be used. The touch screen (500) or button panel may be located in a surfers' passing zone before riding the next wave. In this or other embodiments, other permissible devices, such as smartwatches or remote controls, may be used for the generation of events (E3) of type E3 from any location. The facility of figures also comprises a microphone (511) and a loudspeaker (512) in the take-off area.

### Functional blocks system (see Fig. 2A and 2B)

The system (200) of figures comprises a controller (201) communicated with the wave W generator system (1) and with the event detection equipment and devices described above. The system (200) also comprises the image capturing system (300) and an artificial vision system (310) for recognition and analysis of the generated images. The controller (201) receives user data, receives all customised preferences and collects all signals or events (E1, E2, E3) of types E1, E2, E3 from the different sensors (600), from the artificial vision system (310) receiving the images from the image capturing system (300) comprising the cameras (301, 302, 303, 304) and from the user via the input devices. From these signals, the controller (201) identifies the user, controls the surf session, determines modifications to the ongoing session and generates an output (400) for the wave W generator system (1).

### NON-EXHAUSTIVE LISTS

They are included as examples to illustrate the possibilities of the system.

### Events (E1) (detected from signals emitted by sensors (600)):

- no lifeguard is present, detected by a presence sensor (603) or by an optional alternative pressure sensor on a control;
- presence of strong off-shore wind above a certain speed threshold, detected by a wind sensor (602);
- relevant decrease of water level below a given setpoint level, detected by a level sensor (601).

### Events (E2) (generated by the artificial vision system):

- unconscious surfer, injured surfer;
- absence of surfers in the paddling area for a specified time;
- no lifeguard is present at the surveillance post;
- detection of a surfer in front of the wave drop;
- detection of a certain number of user drops in the take-off zone;
- anomalies of the surf session due to various causes:
   meteorological, unknown, changes in the bathymetry due to settlement in civil works or others.

### Events (E3) (examples of events (orders) generated from surfer inputs and their corresponding preference):

- order of change of a parameter of the current wave type, including:
   change in take-off difficulty (D), change in wave speed (S), change in wave end (F);
- order of selection of another type of wave for the next wave, according to the wave types allowed for the current session (intermediate, beginner...);
- order to conclude the current session.

### Possible actions triggered by events:

In general, they involve stopping the wave generator system (1) in response to a customisable alarm condition, pausing the current session, or modifying the session based on detected events:
- stop of the generator system (1) in emergency situations (surfer unconscious, injured, no surfers, no lifeguard at the surveillance post);
- pause of the session in the following situations: detection of surfer in front of the wave drop, absence of surfer in the paddling zone;
- resume of the session after a command received from the button panel or touch screen (500) located at the take-off;
- change to a wave with different take-off difficulty as a result of the following situations: strong wind detection, water level decrease detection;
- switching to a wave with different take-off difficulty, e.g. as a result of detecting a certain number of take-off drops;
- change of wave type as a result of a preference chosen by the user, e.g. from the touch screen (500) or from a button panel;
- change of wave type following a request by voice or a gesture recognised by the artificial vision system (310);
- modify a parameter associated with the wave (e.g. increase speed S or set end type F stronger) following a user request from the touch screen (500) or from a button panel;
- change wave type of a lower difficulty level (e.g. due to insufficient water level with respect to a setpoint level, or due to an off-shore wind speed higher than a setpoint value);
- possible automatic actions on the session as a result of an identification of anomalies detected by the sensors (600) or by the artificial vision system (310).

### Examples of concrete outputs (manoeuvres) on the wave generator system (1) to implement changes in the programming sequence:

- stopping the actuation of all pistons or movable elements (20) in the absence of detection of a prepared surfer;
- reducing the movement amplitude of the movable elements (20) of the first sequential modules, without changing the offset, to reduce the difficulty of take-off D;
- reducing the offset between movable elements (20) to change the speed S,
- varying the amplitude of movement of the movable elements (20) of the last sequential modules and the offset of the last movable elements (20) to alter the end F of the wave.

In general:
- varying the movement amplitude and/or offset and/or speed of movement of some or all of the movable elements of the sequential modules;
- acting on an actuator or structure of a sequential pneumatic chamber.

### Functioning of the system of figures (see also Fig. 3)

In the particular embodiment of figures, there is a specific device for generating customised preferences. This is a touch screen (500) located in the take-off area. In the particular embodiment of figures, user recognition is carried out as follows: during user registration, the surfer enters a facial image identifying his profile. The artificial vision system (310) includes modules for facial and body recognition of the surfer, identification of the surfboard or analysis of the biomechanics of surfing and from the image capturing system (300).

By default or in the absence of identification of a registered surfer, the wave W generator system (1) generates non-personalised programmed waves according to a conventional session.

Using the artificial vision system (310), the controller identifies a registered surfer. Registered surfers have the possibility to access the following options:
- define their customised preferences, by defining Predefined Events (PE) and Session Preferences associated to these Events (PSE) received by the session customisation module (215) of the controller;
- enable/disable changes based on E1 and/or E2 events from the touch screen (500) by means of the corresponding selectors (501, 502);
- modify their current session from the water, via the touch screen (500) or, optionally, via voice or image signals;
- define replacement waves managed by the session customisation module (215) of the controller (201);
- define a replacement session for each type of existing commercial session level (expert, intermediate, beginner...);
- define a list of default waves of each type, with all their associated parameters;
- set the type of the next wave to surf from the touch screen (500) in a quick way, entering only the type of wave, so that the controller loads the default parameters associated with that type of wave, minimising the parameterisation time required from the touch screen (500).

The controller (201) of the embodiment of figures manages the options and preferences by applying, for example, the following priorities:
1. Next wave selected via the touch screen (500): that wave type is generated, even if the session replacement options are activated.
2. Changes based on events enabled from the touch screen (500).
3. Own replacement session: option applied by the controller when option 1 is not activated. The wave generator launches waves according to the replacement session predefined by the registered user, including changes based on events defined in the replacement session.
4. Default replacement wave: option applied by the controller (201) when there is no wave selected through the touch screen (500) and no replacement session is enabled. A default replacement wave defined for unregistered users is triggered. Changes based on events may or may not be active in the definition of the chosen "default replacement wave".
5. Conventional wave programmed for conventional users: option applied by the controller (201) when none of the above is active/chosen. Changes based on events shall be as defined for non-registered users.

In other embodiments, the preferences applied by the controller may vary.

Fig. 3 illustrates an example of wave selection (priority 1) by the surfer. When entering the wave type T2, the controller (201) returns the rest of the predefined parameters, according to the list of "default waves" for that wave type. These parameters (D2, S2, P1 and F2) are displayed through the touch screen (500) so that the selection of the next desired wave through the screen will require no more than 1 second in normal conditions (the time required to dial "T" and "2"). In case the wave type chosen from the touch screen (500) is not included in the list of "default waves", alternatively, the controller (201) selects the default parameters defined for that wave type in a conventional session.

As can also be seen in Fig. 3, the name of the registered user is displayed on the screen. The modifiable options include: other wave type, wave parameters, number of such waves to be generated, and enabling/disabling of session changes by external events (E1) or events (E2) associated to the surfer, by means of the corresponding selectors (501, 502). As indicated above, the system can be configured to give priority to these options.

The surfer can also customise their session through the following options. An example of each option is included for information purposes. The system is compatible with other options not listed.

### Session customisation options

The implementation of options is done on a case-by-case basis according to established priorities.

### Definition of custom wave list

Non-limiting example:
- M1: not defined (no interest of the surfer in this type),
- M2: not defined (no interest of the surfer in this type),
- M3: not defined (no interest of the surfer in this type),
- T1: default parameters D2 S2 P2 F3; N waves = undefined; external event changes = Off (disabled); surf-related event changes = On (enabled),
- T2: default parameters D2 S2 P1 F3; N waves = undefined; external event changes = Off (disabled), surf changes = On (enabled),
- T3: default parameters: D1 S1 P1 F2; N waves = undefined; changes by external events = Off (disabled), changes by own surfing = On (enabled).

The other types of waves can be defined in a similar way.

### Definition of customised replacement waves

To automatically replace a type of wave corresponding to a conventional session with another wave preferred by the surfer (of the same type, but with other parameters or even of another type compatible with the session level).

For example:
- replacement of conventional type T1 by type T2 with parameters D1 S2 F3, with changes by external events = Off (disabled), changes by own surfing = On (enabled).
- replacement of conventional parameters of type T2 by type T2 D2 S1 F2, with changes by external events = Off (disabled), changes by own surfing = On (enabled).
- replacement of type T3 by type T2 with D1 S1 F1, changes by external events = Off (disabled), changes by own surfing = On (enabled).

### Definition of a customised full replacement session

To define a complete replacement session for each level, instead of defining separate replacement waves.

Example, for an expert replacement session:
- T2 replaced by X waves of T1 D1, S2, F1 and all other waves T1, D2, S2, F2
- T3 ... etc.

## Claims

1. Method, implemented in a programmable controller (201), for customising at least one surf session in a facility provided with a wave W generator system (1) controlled by the controller (201), the method comprising the following steps:
a. receiving a set of customised preferences before the beginning of the surf session and/or during the surf session;
b. detecting at least one event during the surf session;
c. modifying the programming of the ongoing surf session as a result of the detection of the at least one event and based on the set of customised preferences, generating an output (400) to act on the wave generator system (1).

2. Method, according to claim 1, wherein:
- the set of customised preferences of the step a. comprises the definition of at least one Session Preference associated with an Event (PSE) and the definition of at least one Predefined Event (PE); and
- step c. is performed on the basis of the Session Preference associated with an Event (PSE) when at least one event (E1, E2) matching the Predefined Event (PE) is detected in the facility.

3. Method, according to claim 1, wherein:
- the set of customised preferences of the step a. comprises the definition of at least one Session Preference associated with an Input (PSI) of a user; and
- step c. is performed on the basis of the Session Preference associated with an Input (PSI), when at least one event (E3) generated from a user triggered input is detected.

4. Method, according to claim 1, wherein each event handled by the controller may be any of the following:
- external event (E1) of type E1 from different sensors of the facility,
- event (E2) of type E2 determined by an artificial vision system (310) from an image capturing system (300) of the facility,
- event (E3) of type E3 generated as a result of a user triggered input.

5. Method, according to claim 1, wherein
- the set of customised preferences of the step a. comprises the definition of at least one Session Preference associated with an Event (PSE) and the definition of at least one Predefined Event (PE), as well as the definition of at least one Session Preference associated with an Input (PSI) of a user; and
- step c. is performed on the basis of the Session Preference associated with an Event (PSE) when at least one event (E1, E2) matching a Predefined Event (PE) is detected in the facility or on the basis of the Session Preference associated with an Input (PSI) when at least one event (E3) generated from a user triggered input is detected.

6. Method, according to claim 1, wherein step a. comprises defining a customised replacement session that determines preferences in relation to a conventional surf session from a predefined menu.

7. Method, according to claim 6, wherein the customised replacement session comprises replacing each wave of a conventional session with another replacement wave.

8. Method, according to claim 6, wherein the customised replacement session comprises the complete replacement of a conventional surf session from a predefined menu with a replacement session.

9. Method, according to any one of the preceding claims, wherein the generator system (1) comprises at least one set of sequential modules, each sequential module being provided with a movable element (20) capable of causing disturbances in a mass of water (2) for the generation of waves W and the movable elements (20) moving with a given amplitude, speed and a given time offset between them, wherein the output actuation of the step c comprises modifying the amplitude of movement and/or the time offset and/or the speed of at least some of the movable elements (20).

10. Method, according to any one of the preceding claims, wherein the generator system (1) comprises at least one set of sequential pneumatic chambers and wherein the output actuation of the step c. is performed on at least one drive or structure of the pneumatic chambers to modify the generation of waves W.

11. System for customising of a surf session in a facility comprising:
- a wave W generator system (1) controlled by a programmable controller (201);
- a session customisation module (215) for performing step a. of the method according to claim 1,
- detection means communicated with the controller (201), for performing step b. of the method according to claim 1,
- instructions comprised in the controller (201) for performing step c. of the method according to claim 1.

12. System (200), according to claim 11, wherein:
- the session customisation module (215) comprises data relating to at least one Session Preference associated with an Event (PSE) and data relating to at least one Predefined Event (PE); and
- the detection means are capable of detecting at least one event (E1; E2) in the facility matching with a Predefined Event (PE) and transmitting it to the controller (201).

13. System (200), according to claim 12, wherein the detection means comprise at least:
- a water level sensor (601) and a wind sensor (602) for event generation (E1),
- an artificial vision system (310) for generating events (E2) from an image capturing system (300).

14. System (200), according to claim 11, wherein
- the session customisation module (215) comprises data relating to Session Preferences associated with User Input (PSI); and
- the detection means are capable of detecting at least one event (E3) generated from a user triggered input.

15. System (200), according to claim 14, wherein the detection means comprise at least one device located at the take-off area, for example, a button panel or a touch screen (500), for generating events (E3).

16. System (200), according to claim 15, comprising a device provided with a user interface for entering preferences, e.g., at least the type of determined priority wave, and provided with one or more selectors (501, 502) for enabling and disabling session changes based on events.

17. System (200), according to claim 11, wherein
- the session customisation module (215) comprises data relating to at least one Session Preference associated with an Event (PSE) and data relating to at least one Predefined Event (PE); and
- the session customisation module (215) also comprises data relating to at least one Session Preferences associated with an Input (PSI) of a user; and
- the detection means are capable of detecting at least one event (E1 ;E2) in the facility matching a Predefined Event (PE) and transmitting it to the controller (201); and
- the detection means are also capable of detecting at least one event (E3) generated from a user triggered input.

18. Program comprising instructions which, when executed in a programmable controller (201) of a facility provided with a wave W generator system (1), cause the execution of the steps of the method of claim 1 and, optionally, the steps of claims 2 and/or 3.
